Europäisches Patentamt

European Patent Office

Office européen des brevets

(11) Publication number: **0 421 618 A2**

# EUROPEAN PATENT APPLICATION

(21) Application number: 90310020.4

(22) Date of filing: 13.09.90

(51) Int. Cl.⁵: **B25J 17/02**, B23Q 1/14, B24B 9/00

(30) Priority: 05.10.89 GB 8922451

(43) Date of publication of application:
10.04.91 Bulletin 91/15

(84) Designated Contracting States:
DE FR GB IT

(71) Applicant: ROLLS-ROYCE LIMITED
65 Buckingham Gate
London, SW1E 6AT(GB)

(72) Inventor: Hodge, Neil Leslie
22 Portland Street
Staple Hill, Bristol(GB)
Inventor: Strickland, Harold Terence
2 St. Annes Close, Cadbury Heath
Bristol(GB)

(74) Representative: Jennings, Trevor Cecil
c/o Rolls-Royce PLC, Patents Department,
P.O. Box 3
Filton, Bristol BS12 7QE(GB)

(54) Compliant mount and mechanical stop.

(57) The amount of material removed from a member by a tool urged against the member by a compliant mount is limited by a stop fixed relative to the tool which contacts the member when the limit is reached.

Fig. 3A.

EP 0 421 618 A2

## COMPLIANT MOUNT AND MECHANICAL STOP

This invention relates to a compliant mount and stop.

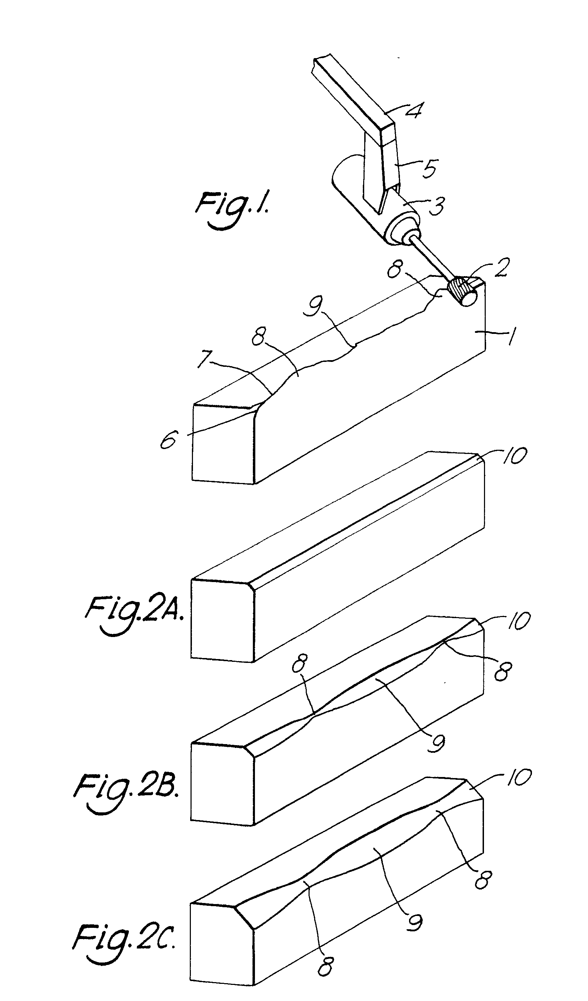

In finishing operations to modify the surface features of components it is often necessary to machine the surface of a component without the precise position of the component being known, due to component positioning and manufacturing tolerances for example. An example of such an operation is removing burrs to produce a chamfer on a component edge. A deburring operation is shown in figure 1.

If an automatically controlled machine tool is used to carry out the finishing operation this uncertainty of position will result in the tool not contacting the surface in some areas and being forced into the surface in other areas. This is unacceptable because the areas of surface which the tool fails to contact will not be finished properly while in the areas where the tool is forced into the surface the surface and the tool may be damaged or even destroyed.

This problem can be solved by the use of compliant mounts. These compliant mounts are mounting systems placed between the machine tool and its manipulating mechanism and arranged to urge the tool against the surface of a component with a constant force regardless of the separation of the component surface and the manipulating mechanism. This should ensure that the whole surface of the component is uniformly finished. It has been found however that the use of a constant force causes the finish on the component to vary depending on the degree to which its surface features required modification.

An example is shown in figure 1 of the deburring of the edges of a component 1, a common finishing operation.

A grinding tool 2 is driven by a motor 3 which is linked to a robot arm 4 by a compliant mount 5. The compliant mount 5 urges the grinding tool 2 against an edge 6 of the component 1 with a constant force independent of the separation of the robot arm 4 and the component 1. Edge 6 has a burr 7 left by earlier machining of the component 1. The robot arm 4 moves approximately parallel to the edge 6 of the component 1 and this causes the grinding tool 2 to move along the edge 6.

Ideally the constant force between the grinding tool 2 and the edge 6 should cause the grinding tool 2 to remove the burr 7 and produce a chamfer 10 of constant depth along the edge 6, as shown in figure 2A.

It has been found that a problem occurs because the size of the burr 7 varies from place to place along the edge 6, for example the burr 7 is relatively thick in the regions 8 and relatively thin in the region 9. As a result the depth of the chamfer 10 will vary along the edge 6 in dependance on the thickness of the burr 7 as shown in figures 2B and 2C. For example if the compliant mount 5 urges the grinding tool 2 against the edge 6 with a force which will produce the correct depth of chamfer 10 in the regions 9 of relatively thin burring the chamfer 10 will be too shallow in the regions 8 of relatively thick burring as shown in figure 2B. On the other hand if the compliant mount 5 urges the grinding tool 2 against the edge 6 with sufficient force to produce the correct depth of chamfer 10 in the regions 8 of relatively thick burring the chamfer 10 will be too deep in the regions 9 of relatively thin burring.

This invention was intended to overcome this problem at least partially.

This invention provides apparatus for machining a member comprising, a tool, a compliant mount able to urge the tool against the member and allowing the tool to move along two orthogonal axes relative to the member and a stop fixed relative to the tool and arranged to limit the amount of material removed from the member by the tool.

In the deburring example discussed above this provides the advantage that the compliant mount can urge the tool against the component hard enough to remove the thickest burring encountered and the stop will prevent the chamfer depth becoming excessive in regions of thinner burring.

It is preferred that the stop limits the amount of material removed from the member by contacting the surface of the member when the limit is reached.

Preferably the stop limits the amount of material removed from the member by limiting the movement of the tool along both of said axes relative to the member because this is the simplest way of limiting the amount of material removed by the tool and it is further preferred that this is achieved by preventing movement of the tool towards the member beyond predetermined points on each of said axes.

Where the tool is a deburrer and an edge of a member is to be deburred it is preferred that the stop contact the member on both sides of the edge because this allows movement of the tool along one of said axes to be limited by each contact point.

Advantageously the stop can be made to contact the member at at least two points equidistant from and on opposite sides of the edge.

Embodiments of the invention will now be described by way of example only with reference to the accompanying diagrammatic figures in which;

Figure 3A shows a side view of a deburrer employing the invention;

Figure 3B shows a cross section along the line X-X in figure 3A;

Figure 3C shows an end view of the deburrer of figure 3A when starting a deburring operation;

Figure 4A shows a side view of another type of deburrer employing the invention;

Figure 4B shows a more detailed side view of a portion of the deburrer of figure 4A;

Figure 4C shows an end view of the deburrer of figure 4A;

Figure 4D shows a cross-section along the line Y-Y in figure 4C; and

Figure 4E shows an end view of a modified version of the deburrer of figure 4A; identical parts having the same reference numerals throughout.

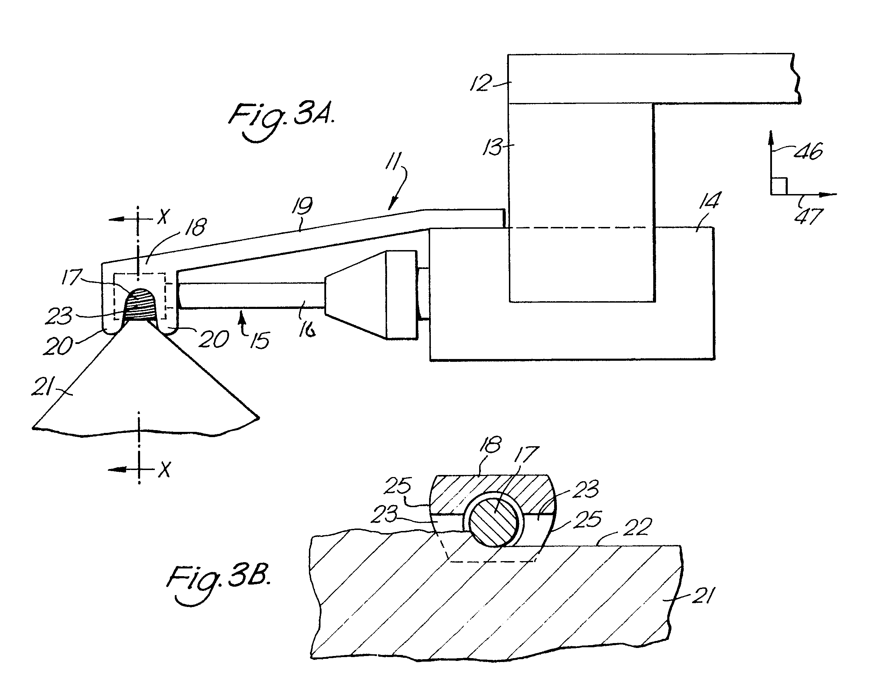

Referring to figures 3A and 3B a deburrer 11 is linked to a robot arm 12 by a compliant mount 13.

The deburrer 11 comprises a motor 14 attached to the compliant mount 13 and able to drive a deburring tool 15. The deburring tool 15 has two sections, a cylindrical shaft 16 and a cylindrical grinding head 17.

A stop 18 surrounds the grinding head 17 and has an elongate portion attached to the motor 14 which supports the stop 18. Projections 20 extend from the stop 18 on each side of the grinding head 17.

In operation the robot arm 12 moves to a position where the grinding head 17 is in contact with an edge 22 of a component 21.

The robot arm 12 then moves parallel to the expected direction of the edge 22, that is perpendicular to the axis of the deburring tool 15, while the motor 14 rotates the deburring tool 15.

This movement of the robot arm 12 moves the grinding head 17 along the edge 22.

Any change in the distance between the robot arm 12 and the edge 22 due to differences between the expected and actual directions of the edge 22 are taken up by the compliant mount 13 which allows the deburrer 11 to move relative to the robot arm 12 in the directions of the two perpendicular axes 46 and 47 in figure 3A while urging the grinding head 17 against the edge 22 with a constant force.

As the grinding head 17 moves along the edge 22 the projections 20 limit the depth of chamfer which the grinding head 17 cuts by contacting the edges of the component 21, preventing further movement of the grinding head 17 towards the component 21 and so preventing the grinding head 17 grinding away further material from the component 21.

As a result, provided that the compliant mount 13 urges the grinding head 17 against the edge 22 with sufficient force to remove the thickest burring encountered, the depth of chamfer cut by the deburrer 11 will be constant and set by the length and position of the projections 20.

The robot must keep the tool at a constant 45° angle relative to the faces of the component 21 in order for a constant chamfer depth to be maintained. Therefore a two axis linear compliant mount is used because a single pivoting compliant mount would cause the angle of the tool relative to the component to alter as the relative positions of the robot arm 12 and component 21 alters.

The stop 18 has two gaps 23 between the projections 20, one gap 23 being on each side of the grinding head 17. The gaps 23 allow the burr on the edge 22 into contact with the grinding head 17; if they were not present the stops would simply cause the grinding head 17 to lift over all of the burring. The gaps 23 also allow material removed from the component 21 by the grinding head 17 to escape, thus preventing it clogging the grinding head 17 by becoming trapped between the grinding head 17 and the stop 18.

The two gaps 23 are symmetrically placed and shaped on either side of the grinding head 17 so that the deburrer 11 can be used in either direction along the edge 22.

The sides 25 of the stop 8 are curved inwards so that if the deburrer 11 is moved towards the end of a component 21 along a line 24 which will bring the sides 25 of the stop 8 into contact with the end of the component 21, as shown in figure 3C, the curved sides 25 will cause the stop to ride up into the correct position on the edge 22.

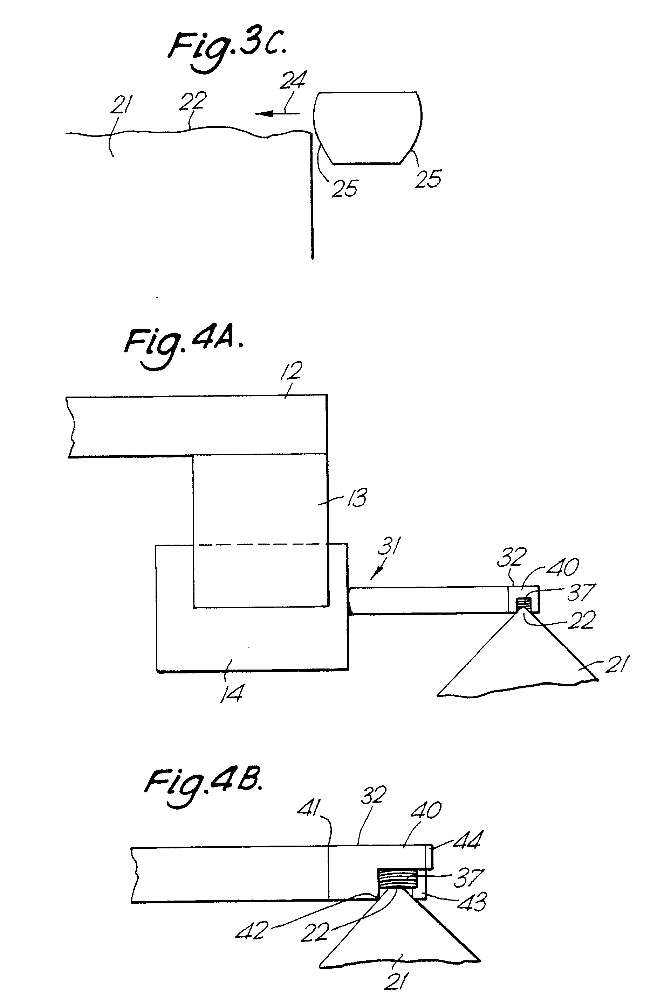

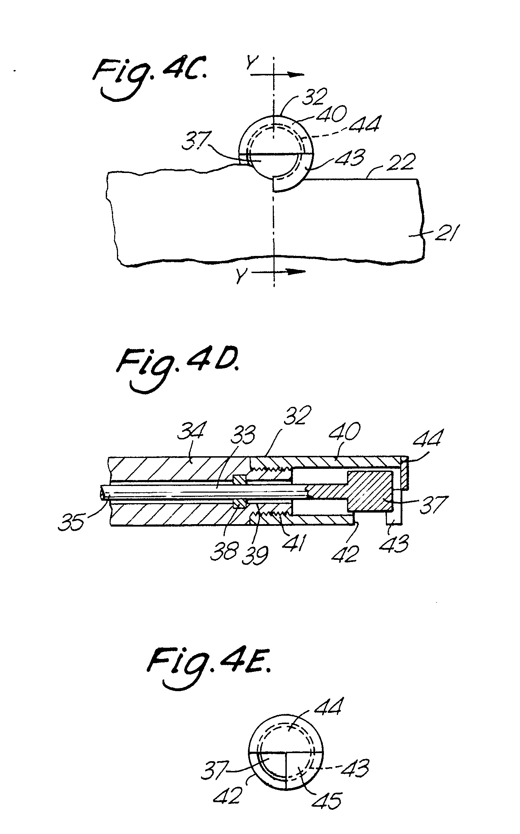

Referring to figures 4 a deburrer 31 is used with a second type of stop 32. The deburrer 31 is linked to a robot arm 12 by a compliant mount 13 as before. The deburrer 31 comprises a motor 14 which drives a rotary file 33. The rotary file 33 comprises a shaft 35 and a filing head 37 secured to the shaft 35. Surrounding the rotary file 33 is a hollow cylindrical support member 34 which is secured at one end to the motor 14 and bears an external screw thread on a reduced radius portion 39 at its other end.

The shaft 35 is supported at its link to the motor 14 and on an annular bearing 38 inside the support member 34.

A hollow stop 32 surrounds the filing head 37 of the rotary file 33, and is secured to the end of the support member 34 by a screw joint 41 formed by the external screw thread on the reduced radius portion 39 of the support member 34 and an internal screw thread on the stop 32.

The stop 32 is a hollow cylinder with a semicircular section cut away at its end to expose the filing head 37 and leave a semicircular edge 42. A curved arm 43 at the end of the stop 32 extends parallel to the semicircular edge 42, the arm 43 extends from the stop 32 for a quarter of a full circle.

In use the robot arm 12 moves the filing head 37 along the edge 22 of the component 21 in the direction of an arrow 44. When the chamfer cut by the filing head 37 is at the correct depth the semicircular edge 42 and the arm 43 contact the surface of the component 22 and prevent the filing head 37 cutting deeper.

The stop 32 is secured to the support member 34 by a screw joint 41 and the rotary file 33 is attached to the motor 14 by a conventional collet (not shown) holding the end of the shaft 35 so that both the stop 32 and rotary file 33 can be removed and replaced by a conventional rotary tool changer (not shown).

The stop 32 will wear out due to frictional wear on the surfaces of the edge 42 and arm 43 which contact the component 21. As these surfaces wear away the gap between them will widen and the chamfer depth will increase as a result. When this wear has produced an unacceptable increase in the chamfer depth the stop 32 is unscrewed by the tool changer and a new stop 32 screwed into place.

The rotary file 33 cannot be removed and replaced without first removing the stop 32 because the stop 32 encloses the rotary file 33. As a result, in order to replace a worn rotary file 33 the stop 32 is unscrewed then the collet is unfastened, a new rotary file is then fastened into place followed by the old stop 32.

The end of the stop 32 is closed by a semicircular flat plate 44 in order to increase its stiffness and so reduce bending of the arm 43, because any bending of the arm 43 will allow the grinding wheel 35 to cut an overly deep chamfer. Although it would be possible to extend the arm 43 through a half circle and link it to the stop 32 at both ends this can produce problems of the arm 43 riding over burrs and lifting the rotary file 33 away from the edge 22 of the component 21.

A prefered method of increasing the stiffness of the arm 43 if required is use an end cap 45 linking the arm 43 to the end closure plate 44 as shown in figure 4E.

Any other rotary machine tool may be fitted into the collet and manipulated by the robot arm 12, providing the stop 32 is removed. Thus the system shown could be used for a number of robotic manufacturing steps with different tools with the stop 32 being screwed into place for deburring operations and removed for other operations.

Stops according to this invention can easily be used to control the amount of machining carried out in any operation employing compliant mounts and are not limited to deburring operations.

## Claims

1 Apparatus for machining a member comprising, a tool, a compliant mount able to urge the tool against the member and allowing the tool to move along two orthogonal axes relative to the member and a stop fixed relative to the tool and arranged to limit the amount of material removed from the member by the tool.

2 Apparatus as claimed in claim 1 where the stop limits the amount of material removed from the member by contacting the surface of the member when the limit is reached.

3 Apparatus as claimed in claim 2 where the stop limits the amount of material removed from the member by limiting the movement of the tool along both of said axes relative to the member.

4 Apparatus as claimed in claim 3 where the stop limits the amount of material removed from the member by preventing movement of the tool towards the member beyond predetermined points on each of said axes.

5 Apparatus as claimed in any preceding claim where the stop contacts the member at a plurality of discrete locations.

6 Apparatus as claimed in any preceding claim where the tool is a deburrer.

7 Apparatus as claimed in claim 6 when dependent on claim 5 where an edge of the member is to be deburred and the stop contacts the member on both sides of the edge.

8 Apparatus as claimed in claim 7 where the stop contacts the member at at least two points equidistant from and on opposite sides of the edge.

Fig.1.

Fig.2A.

Fig.2B.

Fig.2C.

EP 0 421 618 A2

Fig. 3A.

Fig. 3B.

6

Fig.3C.

Fig.4A.

Fig.4B.

Fig.4C.

Fig.4D.

Fig.4E.